# EUROPÄISCHE PATENTSCHRIFT

(11) **EP 1 212 660 B1**
(45) Veröffentlichungstag und Bekanntmachung des Hinweises auf die Patenterteilung: **16.04.2003**
(21) Anmeldenummer: 00958429.3
(22) Anmeldetag: 11.08.2000
(51) Int. Cl.: G03F 7/20, G02B 27/18

(54) **VORRICHTUNG UND VERFAHREN ZUR WELLENLÄNGENABHÄNGIGEN LICHTAUSKOPPLUNG**
DEVICE AND METHOD FOR WAVELENGTH DEPENDENT LIGHT OUTCOUPLING
DISPOSITIF ET PROCEDE DE DECOUPLAGE DE LUMIERE EN FONCTION DE LA LONGUEUR D'ONDE

(30) Priorität: 17.09.1999 DE 19944761
(43) Veröffentlichungstag der Anmeldung: 12.06.2002
(73) Patentinhaber: Basys Print GmbH Systeme für die Druckindustrie, 19258 Boizenburg (DE); Toyo Ink. MFG. Co. Ltd., Tokyo 173-8666 (JP)
(72) Erfinder: EGGERS, Stefan, D-21465 Wentorf (DE); ANDREAE, Claas, D-21382 Brietlingen (DE)
(74) Vertreter: Vonnemann, Gerhard, Dr.-Ing.
(86) Internationale Anmeldenummer: EP0007841
(87) Internationale Veröffentlichungsnummer: WO01022168

(56) Entgegenhaltungen:
- US-A- 4 095 881
- US-A- 5 537 168
- US-A- 5 726 739
- US-A- 5 835 195
- PATENT ABSTRACTS OF JAPAN vol. 015, no. 147 (E-1055), 12. April 1991 (1991-04-12) & JP 03 022518 A (NIKON CORP), 30. Januar 1991 (1991-01-30)

## Beschreibung

Die Erfindung betrifft eine Belichtungsvorrichtung mit einer Lampe und einer Kondensoranordnung zur wellenlängenabhängigen Lichtauskopplung, wobei innerhalb des Belichtungsstrahlengangs der Lampe eine erste, wellenlängenabhängige Spiegelschicht zur Teilung des Strahlengangs in einen ersten, für die Belichtung genutzten UV-Anteil und in einen zweiten, überwiegend sichtbaren und/oder IR-Spektralanteil angeordnet ist, wobei ein zweiter Spiegel im Strahlengang des zweiten Spektralanteils angeordnet ist, der den zweiten Spektralanteil wieder auf die erste Spiegelschicht zurück reflektiert.

Aus der US 4,095,881 ist eine solche Belichtungsvorrichtung für Fotokopierer bekannt. Das Licht einer Halogenlampe trifft dabei auf einen gekrümmten Reflektor, von dem aus ein paralleles Strahlenbündel von einem vor der Lampe im Strahlengang angeordneten Interferenzfilter teilweise reflektiert wird und sein IR-Anteil durchgelassen wird. Der IR-Anteil wird über einen Spiegel zurück in die Lampe reflektiert, um diese aufzuheizen und somit elektrische Energie für den Betrieb der Lampe zu sparen.

Aus der JP-A-3022518 ist ein Belichtungsverfahren bekannt, bei dem innerhalb des Belichtungsstrahlenganges einer Lampe eine wellenlängenselektive Spiegelschicht, die den Strahlengang in einen für die Belichtung genutzten und einen weiteren Spektralanteil aufteilt, durchstrahlt wird. Der weitere Spektralanteil wird im Normalfall auf das Ende eines Lichtleiterbündels fokussiert, welches mit einer Einrichtung zur Kontrolle der korrekten Fokussierung verbunden ist. Nachteilig an dieser Methode ist der Umstand, daß der gesamte, nicht für die Belichtung genutzte Spektralanteil zu einer erheblichen Erwärmung der von ihm bestrahlten Geräteteile führt, die eine Dejustierung derselben oder sogar deren Zerstörung zur Folge haben kann.

Aufgabe der Erfindung ist es, eine Belichtungsvorrichtung und ein Verfahren vorzuschlagen, mit welchem die Belichtungsqualität mit einfachen Mitteln optimiert werden kann.

Diese Aufgabe wird erfindungsgemäß dadurch gelöst, daß im Strahlengang des vor dem zweiten Durchgang durch die erste Spiegelschicht an dieser Spiegelschicht reflektierten Lichtanteils des zweiten Spektralanteils ein Betrachtungschirm angeordnet ist und daß zwischen dem Betrachtungsschirm und der ersten Spiegelschicht eine Abbildungsoptik zur Abbildung der Lampe auf dem Betrachtungsschirm angeordnet ist.

Mit Hilfe der ersten, wellenlängenabhängigen Spiegelschicht wird Licht wellenlängenabhängig ausgekoppelt. Dabei wird das von der Lampe emittierte Licht in einen für die Belichtung genutzten UV-Anteil und einen ungenutzten, sichtbaren und IR-Spektralanteil aufgeteilt. Der genutzte UV-Spektralanteil wird in Richtung auf das Objektiv hin abgelenkt, während der sichtbare und der IR-Anteil die Spiegelschicht passieren. Es können durch Optimierung der Spiegelschicht Reflektionskoeffizienten von annähernd R=100% und Transmissionskoeffizienten von T=90% erreicht werden. Durch den Einsatz mehrerer solcher Einheiten kann eine Unterdrückung von besser 1:1000 bei einer Nutzlichteffizienz von ca. 98% erreicht werden. Durch die Lichtauskopplung gelangt fast nur der UV-Anteil zur Belichtung auf die Offsetdruckplatte. Die auftreffende Energie im unerwünschten Spektralbereich ist sehr gering. Es kommt zu keiner unnötigen Erwärmung und den damit einhergehenden negativen Folgen.

Der die erste, wellenlängenabhängige Spiegelschicht passierende, für die Belichtung ungenutzte sichtbare und IR-Spektralanteil wird an dem, insbesondere senkrecht zur Ausbreitung des ungenutzten Spektralanteils angeordneten zweiten Spiegel, zurück in Richtung erster Spiegelschicht reflektiert. Der nun folgende zweite Durchgang durch die erste Spiegelschicht erfolgt, genau wie der erste Durchgang, nicht vollständig, da eine Restreflektion bleibt. Ein Anteil A=T*(1-T) wird an der Spiegelschicht reflektiert und wird in eine Richtung vom Objekt weg auf einen Betrachtungsschirm hin abgelenkt, auf welchem dann mittels einer Abbildungsoptik ein Bild der Lampe entsteht. Dieses Abbild dient zur Justage der Lampe. So ist es möglich, die Positionierung der Lampe wesentlich effektiver zu gestalten, als dies ein unjustierter Einbau auf Grund der mechanischen Toleranzen von Lampen zuläßt. Es ergibt sich eine wesentlich genauere Ausleuchtung des zu beleuchtenden Objekts. Zur Erleichterung der Justage können auf dem Betrachtungsschirm entsprechende Referenzmarken angebracht sein.

Der größte Teil des zur Belichtung nicht genutzten zweiten Spektralanteils durchstrahlt die Spiegelschicht wieder zurück in Richtung Lampe, gelangt also nicht zur Offsetdruckplatte. Hier kann die Strahlungsenergie durch sowieso schon vorhandene Lampenkühlelemente absorbiert werden. Auf weitere Elemente zur Absorption des nicht zur Belichtung genutzten Anteils kann verzichtet werden. Dadurch kann die gesamte Vorrichtung kompakter und vor allem auch kostengünstiger ausgestaltet werden.

Auf dem Betrachtungsschirm wird ein Abbild der Lampe bzw. des Lampenfilaments oder der Lampenelektroden erzeugt. Mit Hilfe dieses Abbildes kann nun eine effiziente Justage der Belichtungsvorrichtung vorgenommen werden. Der Betrachtungsschirm besteht vorzugsweise aus einer Mattscheibe, auf der ein spiegelverkehrtes Bild der Lampe projiziert wird. Diese einfache Ausgestaltungsform des Betrachtungsschirm ist kostengünstig in der Herstellung und gibt die Lage der Lichtquelle als Abbild ausreichend genau wieder.

Damit auf dem Betrachtungsschirm ein Abbild der Lampe dargestellt werden kann, ist zwischen dem Betrachtungsschirm und der ersten Spiegelschicht eine Abbildungsoptik zur Abbildung der Lampe auf dem Betrachtungsschirm angeordnet. Diese Abbildungsoptik besteht beispielsweise aus einem Linsensystem. Der Vorteil eines Linsensystems besteht in der hohen Lichtstärke und einer guten Genauigkeit. Durch geeignete Anordnung der Linsen besteht die Möglichkeit eine vergrößerte Darstellung der Lampe zu erzeugen, was einer schnellen und vereinfachten Justage der Belichtungseinrichtung förderlich ist. Um den Aufbau zu reduzieren ist es möglich, als Optik eine einfache Lochblende zu verwenden. Gemäß dem Prinzip einer "Kamera Obscura" entsteht so ein spiegelverkehrtes Abbild der Lampe auf dem beispielsweise als Mattscheibe ausgebildeten Betrachtungsschirm.

Gemäß einer vorteilhaften Ausführungsform der Erfindung können Abbildungs- und Reflektionsfunktion der Abbildungsoptik und des Spiegels in einem Bauteil vereinigt werden, wenn der zweite Spiegel gekrümmt ausgebildet ist. Diese Bauweise erspart Kosten, da auf ein kompliziertes und kostenintensives Linsensystem zwischen Spiegelwand und Betrachtungsschirm verzichtet werden kann.

Die Belichtungsvorrichtung kann weiter verbessert werden, wenn im Strahlengang hinter der Lampe ein Reflektor angeordnet ist. Dieser erzeugt ein seitenverkehrtes Abbild der Lampe in, oder vorzugsweise neben der Lampe. Dadurch kann die Lichtausbeute nahezu verdoppelt werden. Zum anderen kann die Justage deutlich vereinfacht werden, da sie nun dahingehend erfolgen kann, daß die Abbilder der Lampe und des Lampenabbildes auf dem Betrachtungsschirm nebeneinander liegen.

Um die Vorrichtung besonders platzsparend und effizient zu gestalten, ist die Anordnung der einzelnen Bauteile von enormer Wichtigkeit. So ist im Strahlengang hinter der Lampe in Strahlenrichtung ein Kondensor und die halbdurchlässige Spiegelschicht angeordnet, die das Licht in einen ersten für die Belichtung genutzten UV-Anteil und einen zweiten Spektralanteil aufspaltet, wobei in geradliniger Folge des zweiten Spektralanteils ein Spiegel angeordnet ist, der den zweiten Spektralanteil zurück in Richtung auf die halbdurchlässige Spiegelschicht reflektiert, die den zweiten Spektralanteil teilweise auf den Betrachtungsschirm lenkend angeordnet ist. So werden in einer sehr kompakten Bauweise alle Funktionen realisiert. Das in die Lampe zurückreflektierte, für die Belichtung nicht genutzte Licht wird dort an Kühlelementen absorbiert. Teile dieses zweiten Spektralanteils dienen zur Justierung der Lampe mit Hilfe des Betrachtungsschirms. Besonders vorteilhaft ist, daß nur der genutzte UV-Anteil auf die Offsetdruckplatte gelangt.

Die Verfahrensaufgabe wird bei einem erfindungsgemäßen Belichtungsverfahren zur wellenlängenabhängigen Lichtauskopplung, bei dem innerhalb eines Belichtungsstrahlengangs einer Lampe mindestenes eine erste, wellenlängenabhängige Spiegelschicht zur Teilung des Strahlengangs in einen ersten, für die Belichtung genutzten und in einen zweiten Spektralanteil durchstrahlt wird, dadurch gelöst, daß mindestens ein Teil des zweiten Spektralanteils zur Justierung der Lampe verwendet wird, daß der zweite Spektralanteil an einem zweiten Spiegel zurück in Richtung auf die erste Spiegelschicht reflektiert wird und daß der beim zweiten Durchgang durch die erste Spiegelschicht reflektierte Lichtanteil auf einem Betrachtungsschirm abgebildet wird.

Besonders vorteilhaft ist an dem erfindungsgemäßen Verfahren, daß die Justage der Lampe durch das entstehende Abbild problemlos erfolgen kann und der größte Teil des sichtbaren Lichtes und vor allem der IR-Strahlung von der Justiervorrichtung ferngehalten wird. Der größte Teil des zweiten Spektralanteils passiert die Spiegelschicht beim zweiten Durchgang durch die vorzugsweise wellenlängenabhängige Spiegelschicht in Richtung Lampe, wo die Energie vorteilhafterweise an schon vorhandenen Kühlelementen absorbiert wird. Weitere Kühlelemente können so entfallen, wodurch eine kompaktere und kostengünstigere Bauweise erfolgen kann.

Das erfindungsgemäße Verfahren wird besonders vorteilhaft ausgeführt, indem das von einer Lampe emittierte Licht mit Hilfe eines Kondensors gebündelt wird und durch eine erste wellenlängenabhängige Spiegelschicht in einen für die Belichtung genutzten und in einen zweiten Spektralanteil aufgespalten wird, wobei der zweite Spektralanteil die Spiegelschicht durchdringt, von einem zweiten Spiegel in Richtung auf die erste Spiegelschicht zurück reflektiert und an der Spiegelschicht teilweise in Richtung auf den Betrachtungsschirm abgelenkt wird, so daß auf dem Betrachtungsschirm ein Abbild der Lampe erzeugt wird. Dieses Abbild wird dann zur Justage der Lampe verwendet.

Diese vorteilhafte Ausführungsform des Verfahrens ermöglicht eine sehr kompakte Bauweise der Vorrichtung.

Anhand der Zeichnungen, die ein Ausführungsbeispiel der Erfindung darstellen, wird diese näher beschrieben.

Es zeigen:
- FIG.1:: eine schematische Darstellung der erfindungsgemäßen Vorrichtung und des Verfahrens und
- FIG.2:: eine schematische Darstellung des Strahlengangs in einer Belichtungsvorrichtung für Druckplatten unter Verwendung einer Mikrospiegelanordnung.

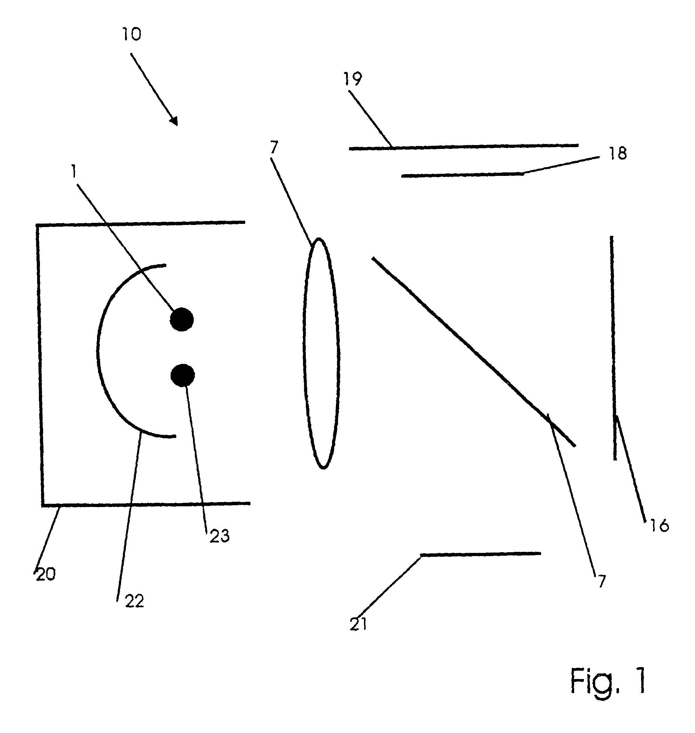

In Figur 1 ist eine Belichtungsvorrichtung 10 dargestellt. Im Strahlengang der Lampe 1 ist ein Kondensor 2 angeordnet, auf den das von der Lampe 1 ausgehende divergente Strahlenbündel fällt und diesen als paralleles Strahlenbündel verläßt. Das parallele Strahlenbündel strahlt in Richtung auf eine halbdurchlässige Spiegelschicht 7, die im weiteren Verlauf des Strahlengangs angeordnet ist. Diese halbdurchlässige Spiegelschicht 7 teil die Lichtstrahlen in einen ersten für die Belichtung genutzten UV-Anteil 14 und in einen zweiten sichtbaren und IR-Anteil 15.

Der zweite Spektralanteil 15 passiert die wellenlängenabhängige Spiegelschicht 7 und trifft in geradliniger Folge auf einen zweiten Spiegel 16, der den zweiten Spektralanteil wieder auf die in 45° Stellung zum Strahlengang des zweiten Spektralanteils 15 stehender Spiegelschicht 7, zurück reflektiert. Ein Teil des zweiten Spektralanteils 17 wird nun um 90°, eine Abbildungsoptik 18 passierend auf einen Betrachtungsschirm 19 reflektiert.

Der genutzte Spektralanteil 14 wird durch die Spiegelschicht 7 direkt in Richtung Objekt 21 bzw. vorher durch weitere Spiegelschichten abgelenkt.

Auf der dem Kondensor 2 gegenüberliegenden Seite der Lampe 1 ist ein Reflektor 22 angeordnet, der ein seitenverkehrtes Abbild 23 der Lampe in oder vorzugsweise neben der Lampe 1 erzeugt. Dadurch kann die Lichtausbeute nahezu verdoppelt werden. Zum anderen kann die Justage deutlich vereinfacht werden, da sie nun dahingehend erfolgen kann, daß die Abbilder der Lampe und des Lampenabbildes auf dem Betrachtungsschirm 19 nebeneinander liegen. Die Strahlungsenergie des ungenutzten Spektralanteils wird durch Lampenkühlelemente 20 absorbiert. Auf weitere Elemente zur Lichtabsorption kann verzichtet werden.

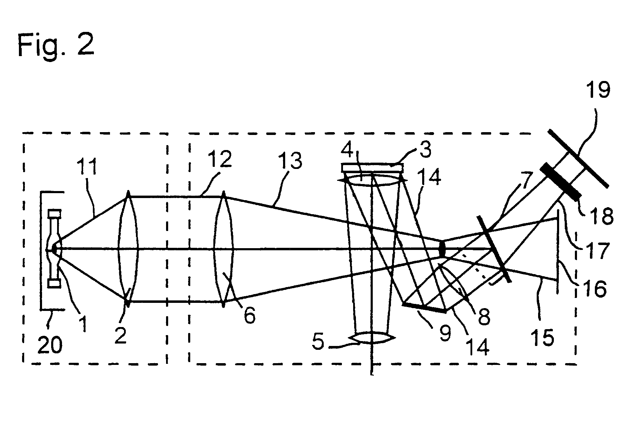

In Figur 2 ist der Strahlengang einer Belichtungsvorrichtung für Druckplatten unter Verwendung einer Mikrospiegelanordnung 3 dargestellt. Man erkennt eine Belichtungsvorrichtung 10 mit einer Lampe 1, einer Kondensoranordnung 2, einem als Mikrospiegelanordnung 3 ausgebildetem Lichtmodulator, einer direkt vor der Mikrospiegelanordnung 3 angeordneten Feldlinse 4 und einem Projektionsobjektiv 5. Weiterhin ist im Strahlengang nach dem Kondensor 2 eine große Sammellinse 6, eine erste wellenlängenabhängige Spiegelschicht 7, eine Sammellinse 8 mit kleinem Durchmesser und ein Planspiegel 9 angeordnet. Hinter der wellenlängenabhängigen Spiegelschicht 7 ist ein zweiter Spiegel 16 angeordnet, der je nach Ausführungsform beispielsweise parabolisch ausgeführt sein kann. Schräg darüber ist eine Abbildungsoptik und ein Betrachtungsschirm zu erkennen.

Von einer Lampe 1 geht ein divergentes Strahlenbündel 11 aus, das auf die Kondensoranordnung fällt und diese als paralleles Strahlenbündel 12 verläßt. Das parallele Strahlenbündel 12 trifft auf die große Sammellinse 6, die daraus ein konvergentes Strahlenbündel formt, welches vor der Sammellinse 8 seinen kleinsten Querschnitt erreicht.

Die wellenlängenabhängige Spiegelschicht 7 teilt das Strahlenbündel 13 in einen ersten UV-Anteil 14 und in einen zweiten sichtbaren und IR-Anteil 15 auf.

Der UV-Anteil 14 wird durch die wellenlängenabhängige Spiegelschicht 7 schräg nach unten reflektiert und erreicht die Sammellinse 8. Vor der kleinen Sammellinse 8 schreitet der UV-Anteil 14 nach einer weiteren Reflexion am Planspiegel 9 schräg nach oben fort und trifft dort auf die Feldlinse 4. Durch die Feldlinse 4 hindurch fällt ein nicht näher bezeichnetes paralleles Strahlenbündel auf die Mikrospiegelanordnung 3, wo es im spitzen Winkel reflektiert wird und erneut durch die Feldlinse 4 hindurchtritt. Die Feldlinse 4 formt aus dem reflektierten Strahlen ein konvergentes Strahlenbündel, welches senkrecht nach unten in das Projektionsobjektiv 5 fällt.

Der zweite, sichtbare und IR-Anteil 15 passiert die wellenlängenabhängige Spiegelschicht 7 und trifft in geradliniger Folge auf einen zweiten Spiegel 16, der den zweiten Spektralanteil 15 wieder auf die wellenlängenabhängige Spiegelschicht, zurück reflektiert. Ein Teil 17 dieses zweiten Spektralanteils wird nun eine Abbildungsoptik 18 passierend auf einen Betrachtungsschirm 19 reflektiert, wodurch eine Justage der Lampe 1 erfolgen kann. Der größte Teil des zweiten Spektralanteil passiert die erste Spiegelschicht wieder und gelangt zurück zur Lampe 1, wo er an Kühlelementen 20 absorbiert wird.

### Bezugszeichenliste

- 1: Lampe
- 2: Kondensor
- 3: Mikrospiegelanordnung
- 4: Feldlinse
- 5: Projektionsobjektiv
- 6: große Sammellinse
- 7: wellenlängenabhängige Spiegelschicht
- 8: Sammellinse
- 9: Planspiegel
- 10: Belichtungsvorrichtung
- 11: divergentes Strahlenbündel
- 12: paralleles Strahlenbündel
- 13: konvergentes Strahlenbündel
- 14: UV-Spektralanteil
- 15: zweiter Spektralanteil
- 16: zweiter Spiegel
- 17: reflektierter Teil des zweiten Spektralanteils
- 18: Abbildungsoptik
- 19: Betrachtungsschirm
- 20: Kühlelemente
- 21: Objekt
- 22: Reflektor
- 23: Abbild der Lampe

## Patentansprüche

1. Belichtungsvorrichtung (10) mit einer Lampe (1) und einer Kondensoranordnung (2) zur wellenlängenabhängigen Lichtauskopplung, wobei innerhalb des Belichtungsstrahlengangs der Lampe (1) eine erste, wellenlängenabhängige Spiegelschicht (7), zur Teilung des Strahlengangs in einen ersten, reflektierten, für die Belichtung genutzten UV-Anteil (14) und in einen zweiten, transmittierten, überwiegend sichtbaren und/oder IR-Spektralanteil (15) angeordnet ist, wobei ein zweiter Spiegel (16) im Strahlengang des zweiten Spektralanteils (15) angeordnet ist, der den zweiten Spektralanteil (15) wieder auf die erste Spiegelschicht (7) zurück reflektiert, **dadurch gekennzeichnet, daß** im Strahlengang des bei dem zweiten Durchgang durch die erste Spiegelschicht (7) an dieser Spiegelschicht (7) reflektierten Lichtanteils (17) des zweiten Spektralanteils (15) ein Betrachtungschirm (19) angeordnet ist und daß zwischen dem Betrachtungsschirm (19) und der ersten Spiegelschicht (7) eine Abbildungsoptik (18) zur Abbildung der Lampe (1) auf dem Betrachtungsschirm (19) angeordnet ist.

2. Vorrichtung nach Anspruch 1, **dadurch gekennzeichnet, daß** der zweite Spiegel (16) gekrümmt ausgebildet ist.

3. Belichtungsverfahren zur wellenlängenabhängigen Lichtauskopplung, bei dem innerhalb eines Belichtungsstrahlengangs einer Lampe (1) mindestenes eine erste, wellenlängenabhängige Spiegelschicht (7) zur Teilung des Strahlengangs in einen ersten, reflektierten für die Belichtung genutzten (14) und in einen zweiten transmittierten Spektralanteil (15) durchstrahlt wird, **dadurch gekennzeichnet, daß** mindestens ein Teil des zweiten Spektralanteils (15) zur Justierung der Lampe (1) verwendet wird, daß der zweite Spektralanteil an einem zweiten Spiegel (16) zurück in Richtung auf die erste Spiegelschicht (7) reflektiert wird und daß der beim zweiten Durchgang durch die erste Spiegelschicht (7) reflektierte Lichtanteil (17) des zweiten Spektralanteils auf einem Betrachtungsschirm (19) abgebildet wird.

4. Verfahren nach Anspruch 3, **dadurch gekennzeichnet, daß** der Großteil des zweiten Spektralanteils im bzw. an Kühlelementen (20) im Lampengehäuse absorbiert wird.

5. Verfahren nach Anspruch 3 oder 4, **dadurch gekennzeichnet, daß** das von einer Lampe (1) emittierte Licht mit Hilfe eines Kondensors (2) gebündelt wird und durch eine erste, wellenlängenabhängige Spiegelschicht (7) in einen für die Belichtung genutzten (14) und in einen zweiten Spektralanteil (15) aufgespalten wird, wobei der zweite Spektralanteil (15) die Spiegelschicht (7) durchdringt, von einem zweiten Spiegel (16) in Richtung auf die erste Spiegelschicht (7) zurück reflektiert und an der Spiegelschicht (7) teilweise in Richtung auf den Betrachtungsschirm (19) abgelenkt wird, so daß auf dem Betrachtungsschirm (19) ein Abbild der Lampe (1) erzeugt wird.

## Claims

1. An exposure device (10) with a lamp (1) and with a condenser arrangement (2) for decoupling light in a wavelength-dependent manner, whereby within an exposure beam path of a lamp (1) there is arranged one first wavelength-dependent mirror layer (7) for splitting the beam path into a first reflected UV component (14) used for exposure and into a second, mainly transmitted visible and/or IR spectral component (15), whereby there is arranged a second mirror (16) in the beam path of the second spectral component (15), which reflects the second spectral component (15) into the first miror layer (7), **characterised in that** an observation screen (19) is arranged in the beam path of the light component (17) of the second spectral component (15), said light component (17) being reflected at this mirror layer (7) by the first mirror layer (7) before the second passage and that between the observation screen (19) and the first mirror layer (7) there are arranged imaging optics (18) for imaging the lamp (1) on the observation screen (19).

2. A device according to one claim 1, **characterised in that** the second mirror (16) is designed arcuately.

3. An exposure method for decoupling light in a wavelength-dependent manner, with which within an exposure beam path of a lamp (1) one beams through at least one first wavelength-dependent mirror layer (7) for splitting the beam path into a first reflected spectral component (14) used for exposure and into a second transmitted spectral component (15), **characterised in that** at least a part of the second spectral component (15) is used for adjusting the lamp (1), that the second spectral component at a second mirror (16) is reflected back in the direction of the first mirror layer (7) and that the light component (17) reflected by the first mirror layer (7) with the second passage is imaged on an observation screen (19).

4. A method according claim 3, **characterised in that** the largest part of the second spectral component is absorbed in or on cooling elements (20) in the lamp housing.

5. A method according to one of the claims 3 and 4, **characterised in that** light emitted by a lamp (1) is bundled with the help of a condenser (2) and by way of a first wavelength-dependent mirror layer (7) is split into a spectral component (14) used for exposure and into a second spectral component (15), wherein the second spectral component (15) penetrates through the mirror layer (7), is reflected by a second mirror (16) back in the direction of the first mirror layer (7), at the mirror layer (7) is partly deflected in the direction of the observation screen (19) so that an image of the lamp (1) is produced on the observation screen (19).

## Revendications

1. Dispositif d'exposition (10) comportant une lampe (1) et un condenseur (2) notamment pour découpler da la lumière en fonction de la longueur d'onde, à l'intérieur du chemin des rayons d'éclairage de la lampe (1), il est prévu au moins une première couche de miroir (7) dépendante de la longueur d'onde pour diviser le faisceau en une première composante UV (14) refléte, utilisée de préfèrence pour l'exposition, et une seconde composante spectrale (15) transmise prédominante visible et/ou IR, et un second miroir (16) est prévu dans le faisceau de la seconde partie de spectre (15), qui réfléchie encore la seconde partie de spectre (15) à la première couche de miroirs (7), **charactérisé en ce que** dans le faisceau de la fraction de lumière (17) réfléchi par la couche de miroir (7), à le second passage à travers la première couche de miroir (7), pour la seconde partie visible ou partie spectrale IR (15) on a un écran d'observation (19) et qu'entre l'écran d'observation (19) et la première couche de miroir (7) on a une optique d'image (18) pour former l'image de la lampe (1) sur l'écran d'observation.

2. Dispositif selon la revendication 1, **charactérisé en ce que** le second miroir 816) est courbe.

3. Procédé d'exposition pour un découplage de lumière en fonction de la longueur d'onde selon lequel, dans le chemin des rayons d'éxposition d'une lampe (1), on place au moins une première couche de miroir (7) dépendante de la longueur d'onde pour diviser le faisceau en une première composante (14) réfléchie utilisée pour l'exposition et une seconde composante spectrale (15) transmise, **charactérisé en ce qu'**au moins une partie de la seconde composante spectrale (15) est utilisée pour ajuster la lampe (1), que la seconde composante spectrale est réfléchie par un second miroir (16) en direction de la première couche de miroir (7) et qu'au second passage à travers la première couche de miroir (7) on forme l'image de la composante de lumière (17) de la seconde partie spectrale réfléchie sur un écran d'observation.

4. Procédé selon la revendication 3, **charactérisé en ce que** la plus grande partie de la seconde composante spectrale est absorbée dans ou sur l'élément de refroidissement 820) du boîtier de lampe.

5. Procédé selon l'une des revendicationes 3 à 4, **charactérisé en ce qu'**on regroupe la lumière par une lampe (1) à l'aide d'un condenseur (2) et on conduit le faisceau à travers une première couche de miroir (7) dépendante de la longueur d'onde pour le diviser en une première composante (14) utilisée pour l'exposition et en une seconde composante spectrale (15), cette seconde composante spectrale (15) traversant la couche de miroir (7), étant réfléchie par un second miroir (16) en direction de la première couche de miroir (7), sur la couche de miroir (7) la lumière est en partie déviée en direction de l'écran d'observation (19) de sorte que sur celui-ci (19) une image de la lampe (1) est former.
